# EUROPÄISCHE PATENTSCHRIFT

(11) **EP 2 221 217 B1**
(45) Veröffentlichungstag und Bekanntmachung des Hinweises auf die Patenterteilung: **05.08.2015**
(21) Anmeldenummer: 09179669.8
(22) Anmeldetag: 17.12.2009
(51) Int. Cl.: B60Q 1/04, B62D 25/08

(54) **Kraftfahrzeugfronteinheit**
Motor vehicle front unit
Unité avant de véhicule automobile

(30) Priorität: 20.02.2009 DE 102009001038
(43) Veröffentlichungstag der Anmeldung: 25.08.2010
(73) Patentinhaber: Faurecia Kunststoffe Automobilsysteme GmbH, 85080 Gaimersheim (DE)
(72) Erfinder: Cottens, Bérénice, 85049 Ingolstadt (DE); Thoulouze, Bertrand, 85049 Ingolstadt (DE); Joly Pottuz, Pascal, 85101 Lenting (DE)
(74) Vertreter: Richardt Patentanwälte PartG mbB

(56) Entgegenhaltungen:
- EP-A1- 1 623 873
- EP-A1- 1 932 749
- DE-A1-102004 057 678
- JP-A- 2003 011 848

## Beschreibung

Die Erfindung betrifft eine Kraftfahrzeugfronteinheit. Kraftfahrzeugfronteinheiten werden im Stand der Technik auch als "Frontunit" bezeichnet.

Aus der EP 1 232 932 A1 ist ein Träger für die Fronteinheit eines Kraftfahrzeugs mit einem Trägerteil zur Verbindung mit den Kotflügeln und dem Fahrgestell des Kraftfahrzeugs bekannt. An dem Trägerteil wird ein Fassungsteil zur Aufnahme einer Scheinwerfereinheit und zur Verbindung mit einem Stoßfänger befestigt. Zur Erleichterung der Montage und zur Verbesserung des Fugenbildes ist an der Scheinwerfereinheit ein Positionierstift angeordnet, der in eine entsprechende Ausnehmung an der Kotflügelbank eingeführt wird.

Weitere ähnliche Fronteinheiten sind aus der FR 2 809 061 A1, DE 199 46 995 A1, DE 196 47 928 A1, EP 0 945 330 A2, EP 1 036 730 A2, DE 10 2004 057 678 A1 und DE 10 2005 013 107 B3 bekannt.

JP 2002-274252 zeigt eine Halterung für eine Scheinwerfereinheit eines Kraftfahrzeugs. Die Scheinwerfereinheit weist Befestigungsmittel zur Befestigung der Halterung an einem Trägerteil einer Fronteinheit eines Kraftfahrzeugs auf. Die Befestigungsmittel werden im Wesentlichen durch ein Scharnier gebildet, bei dem die Halterung angelenkt ist und das mittels Schraubverbindungen am Trägerteil fixiert ist. Das Scharnier kann dabei als erstes elastisches bzw. flexibles Mittel angesehen werden. Die Halterung weist ferner ein zweites elastisch ausgebildetes Mittel, welches vom ersten elastischen Mittel beabstandet ist, auf sowie einen Aufnahmebereich für die Scheinwerfereinheit. Der Aufnahmebereich erstreckt sich dabei zwischen den ersten und zweiten elastischen Mitteln.

EP 1 634 800 A1 zeigt eine Fronteinheit für ein Kraftfahrzeug mit einer Stoßstange und einer Scheinwerfereinheit, wobei ein Träger einen Aufnahmebereich für die Scheinwerfereinheit aufweist und auch über Befestigungsmittel zur Befestigung des Trägers an einem Trägerteil einer Fronteinheit eines Kraftfahrzeugs verfügt. Der Träger ist dabei elastisch ausgebildet. Insbesondere weist der Träger einen flexiblen Bereich, der in Form einer Aussparung ausgebildet sein kann, auf.

Ferner ist aus der DE 600 00 006 T2 ein Frontzusammenbau für ein Fahrzeug mit einer Tragstruktur und einem Scheinwerfer bekannt, wobei der Scheinwerfer an der Tragstruktur zwischen einer vormontierten und einer endmontierten Position um eine geneigte Achse drehbar befestigt ist.

Aus der EP 1 036 730 A2 ist ein Verfahren zur toleranzgenauen Montage von Bestandteilen eines Kraftfahrzeug-Vorderwagens bekannt. Hierbei kann eine Vielzahl von sich gegenseitig beeinflussenden Toleranzen berücksichtigt werden.

Die DE 20 2006 001 307.5 offenbart einen Kraftfahrzeug-Längsträger und eine Kraftfahrzeug-Fronteinheit mit einem Stoßfänger-Querträger und beidseitig an dem Stoßfänger-Querträger angeordneten Flanschen, wobei die Flansche Befestigungsmittel zur Befestigung der Kraftfahrzeug-Fronteinheit an den Kraftfahrzeug-Längsträgern aufweisen.

Die DE 600 24 933 T2 offenbart eine Einbaueinheit für ein Frontend eines Fahrzeuges, wobei das Frontend zwei Teile umfasst, wobei eines der Teile mindestens einen Flüssigkeitsspeicherbehälter umfasst.

Aus JP 2002 055890 A ist eine Front-Struktur für die Karosserie eines Autos bekannt. Dabei wird eine Front-Scheinwerfereinheit, welche an den beiden Seitenabschnitten einer den Kühler des Fahrzeugs tragenden Blende aufgehängt ist, so gelagert, dass sie eine bewegliche Struktur mit einstellbaren Positionen relativ zu einem vorderen Kotflügel darstellt. Hierdurch kann die Frontscheinwerfereinheit montiert werden, indem man den vorderen Kotflügel als Referenz heranzieht und Lücken und Unterschiede in der Höhe in dem teilenden Abschnitt zwischen der Frontscheinwerfereinheit und dem Frontend des vorderen Kotflügels angleicht.

Eine gattungsgemäße Kraftfahrzeugfronteinheit ist aus der JP 200311848A bekannt.

Weitere Kraftfahrzeugfronteinheiten sind aus DE 10 2006 039 627 B3, WO 2008/043642 A1 und DE 10 2006 061 522 A1 bekannt.

Der Erfindung liegt demgegenüber die Aufgabe zugrunde, eine verbesserte Kraftfahrzeugfronteinheit zu schaffen.

Die der Erfindung zugrunde liegende Aufgabe wird mit den Merkmalen des Patentanspruchs 1 gelöst. Ausführungsformen der Erfindung sind in den abhängigen Patentansprüchen angegeben.

Nach Ausführungsformen der Erfindung wird eine Kraftfahrzeugfronteinheit mit einem mittleren Trägerteil zur Aufnahme eines Kühlers des Kraftfahrzeugs und zur Aufnahme einer Verriegelungsvorrichtung für eine Kraftfahrzeugfronthaube geschaffen. Durch das mittlere Trägerteil wird beispielsweise eine sogenannte Kühlerkassette gebildet. Das mittlere Trägerteil kann so ausgebildet sein, dass es mit den Längsträgern des Kraftfahrzeugs verbindbar ist. Beispielsweise ist das mittlere Trägerteil so ausgebildet, dass es an den Längsträgern des Kraftfahrzeugs festgeschraubt werden kann.

Zwischen dem mittleren Trägerteil und den Kotflügelbänken gibt es jeweils einen Zwischenraum. Diese Zwischenräume zwischen dem mittleren Trägerteil und den Kotflügelbänken wird durch linke und rechte Scheinwerferträgerteile überbrückt. Jedes der Scheinwerferträgerteile ist an seinem ersten Ende zur Befestigung an dem mittleren Trägerteil und an seinem zweiten Ende zur Befestigung an einer der Kotflügelbänke ausgebildet. Ferner ist jedes der Scheinwerferträgerteile zum Aufhängen einer Scheinwerfereinheit zwischen den ersten und zweiten Enden ausgebildet. Von ganz besonderem Vorteil ist dabei erfindungsgemäß, dass das mittlere Trägerteil und die an dem mittleren Trägerteil befestigten linken und rechten Scheinwerferträgerteile den einzigen Querträger der Kraftfahrzeugfronteinheit bilden.

Im Stand der Technik beinhaltet nämlich eine Kraftfahrzeugfronteinheit neben den Scheinwerferträgerteilen zumindest einen Querträger. Erfindungsgemäß kann dieser Querträger entfallen, da durch die erfindungsgemäße Ausbildung der Scheinwerferträgerteile und deren Befestigung an dem mittleren Trägerteil ein solcher Querträger gebildet wird. Dies hat insbesondere den Vorteil einer Gewichts- und Kostenersparnis sowie einer Verringerung des erforderlichen Bauraums sowie einer verbesserten Funktionsintegration.

Insbesondere leistet die Erfindung aufgrund der Gewichtsersparnis einen Beitrag zur Reduktion der CO₂-Emissionen des Kraftfahrzeugs.

Nach einer Ausführungsform der Erfindung hat jedes der Scheinwerferträgerteile erste Positionierungsmittel, wie zum Beispiel einen Positionierungsstift, zur Ausrichtung der Scheinwerfereinheit relativ zu dem Scheinwerferträgerteil. Vorzugsweise hat jedes Scheinwerferträgerteil an seinem zweiten Ende zweite Positionierungsmittel zur Positionierung des Scheinwerferträgerteils relativ zu einer der Kotflügelbänke. Ferner kann jedes der Scheinwerferträgerteile an seinem ersten Ende so ausgebildet sein, dass es mit einem Spiel an dem mittleren Trägerteil vormontiert werden kann. Beispielsweise erfolgt die Befestigung des ersten Endes des Scheinwerferträgerteils an dem mittleren Trägerteil durch ein Langloch, welches an dem mittleren Trägerteil oder an dem ersten Ende des Scheinwerferträgerteils ausgebildet sein kann, wobei durch das Langloch eine Schraubverbindung zum Anschrauben des Scheinwerferträgerteils an das mittlere Trägerteil realisiert wird.

Nach einer Ausführungsform der Erfindung ist das mittlere Trägerteil so ausgebildet, dass die ersten Enden der Scheinwerferträgerteile an einem oberen Bereich des mittleren Trägerteils in der Nähe der Verriegelungsvorrichtung befestigt werden können. Beispielsweise ist das mittlere Trägerteil so ausgebildet, dass die ersten Enden der Scheinwerferträgerteile in etwa auf Höhe der Verriegelungsvorrichtung an dem mittleren Trägerteil befestigt werden. Beispielsweise hat das mittlere Trägerteil eine Oberseite, an deren Rändern jeweils die ersten Enden der Scheinwerferträgerteile befestigt sind. Dies ist besonders vorteilhaft, da so eine kurze Maßkette zwischen der Verriegelungsvorrichtung, den ersten Enden der Scheinwerferträgerteile an dem mittleren Trägerteil und den zweiten Enden der Scheinwerferträgerteile geschaffen wird, sodass sich ein qualitativ hochwertiges Fugenbild des Kraftfahrzeugs ergibt.

Nach einer Ausführungsform der Erfindung hat jedes der Scheinwerferträgerteile Befestigungsmittel zur lösbaren Befestigung der Scheinwerfereinheit. Dies hat den Vorteil, dass die Scheinwerfereinheit von dem Scheinwerferträgerteil demontiert werden kann, um beispielsweise ein Leuchtmittel der Scheinwerfereinheit auszutauschen.

Nach einer Ausführungsform der Erfindung ist das Scheinwerferträgerteil so ausgebildet, dass nach Lösen der Befestigungsmittel des Scheinwerferträgerteils die Scheinwerfereinheit von dem Scheinwerferträgerteil noch getragen wird und um einen Abstand nach vorne herausgezogen werden kann. In der herausgezogenen Position kann dann ein Leuchtmittel der Scheinwerfereinheit bequem ausgetauscht werden, ohne dass eine vollständige Demontage der Scheinwerfereinheit erforderlich ist.

Beispielsweise ist das Scheinwerferträgerteil so ausgebildet, dass es zwei Positionierungsstifte zur Ausrichtung der Scheinwerfereinheit relativ zu dem Trägerteil aufweist. Zum Austausch eines Leuchtmittels kann die Scheinwerfereinheit nach Lösen der Befestigungsmittel, d.h. beispielsweise nach Lösung einer Schraubverbindung oder nach Entriegelung einer Schnappverbindung, nach vorne herausgezogen werden, wobei die Scheinwerfereinheit entlang der Positionierungsstifte gleitet und von diesen gehalten wird.

Alternativ oder zusätzlich kann die Scheinwerfereinheit beispielsweise eine Rille aufweisen, in die ein Halteelement der Scheinwerferträgerteil eingreift. Die Scheinwerfereinheit kann zum Austausch des Leuchtmittels nach dem Lösen der Befestigungsmittel entlang der Rille nach vorne herausgezogen werden, wobei die Scheinwerfereinheit von dem Halteelement des Scheinwerferträgerteils gehalten wird. Die Scheinwerfereinheit kann also aus dem Scheinwerferträgerteil schubladenartig nach vorne herausgezogen werden, so dass die Rückseite der Scheinwerfereinheit für einen Austausch eines Leuchtmittels zugänglich wird.

Nach einer Ausführungsform der Erfindung beinhaltet jedes der Scheinwerferträgerteile ein Stahlprofil. Das Stahlprofil kann mit einem Kunststoff umspritzt sein. Die Scheinwerferträgerteile können auch vollständig aus Kunststoff bestehen, insbesondere aus Glasfaser verstärktem Kunststoff. Die Scheinwerferträgerteile können auch als Hohlprofile ausgebildet sein, wobei beispielsweise mit Hilfe von Gas Injection Technology (GIT) oder Water Injection Technology (WIT) Spritzgusstechnologien Hohlräume in das Innere der Scheinwerferträgerteile eingebracht werden können.

Im Weiteren werden Ausführungsformen der Erfindung mit Bezugnahme auf die Zeichnungen näher erläutert. Es zeigen:
- Figur 1: eine perspektivische Teilansicht einer Ausführungsform einer erfindungsgemäßen Kraftfahrzeugfronteinheit in einem montierten Zustand,
- Figur 2: eine Detailansicht der Ausführungsform der Figur 2 bei der Montage der linken Scheinwerfereinheit an der linken Kotflügelbank,
- Figur 3: eine perspektivische Ansicht der Montage der linken Scheinwerfereinheit an dem linken Scheinwerferträgerteil,
- Figur 4: eine weitere Ausführungsform eines erfindungsgemäßen Scheinwerferträgerteils mit einer Scheinwerfereinheit in perspektivischer Ansicht.

Elemente der nachfolgenden Ausführungsformen, die einander entsprechen, sind mit jeweils mit denselben Bezugszeichen gekennzeichnet.

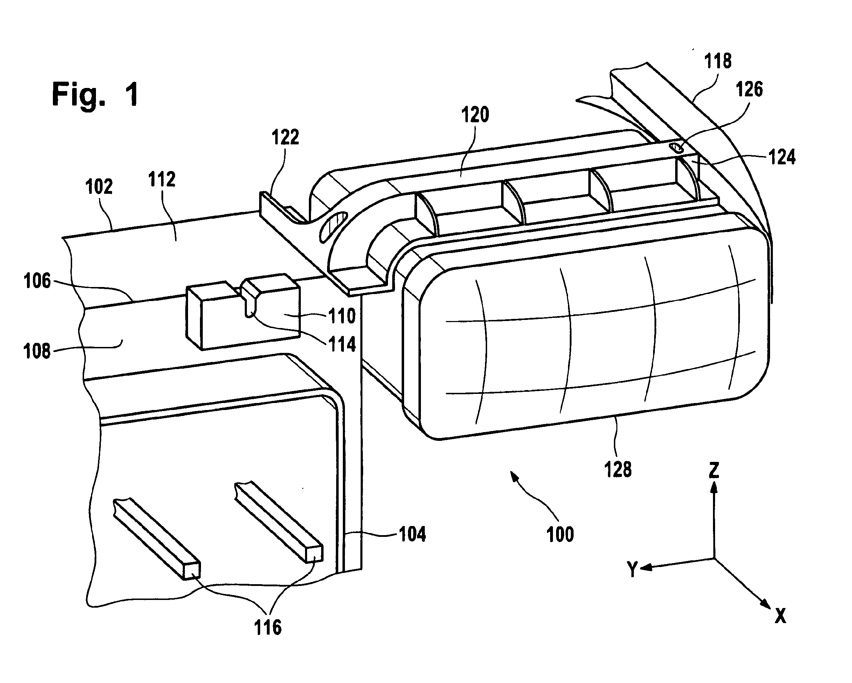

Die Figur 1 zeigt eine perspektivische Teilansicht einer Ausführungsform einer erfindungsgemäßen Kraftfahrzeugfronteinheit 100. Die Kraftfahrzeugfronteinheit 100 hat ein mittleres Trägerteil 102. Das Trägerteil 102 ist als Kühlerkassette ausgebildet, d.h. es trägt einen Kühler 104 eines Verbrennungsmotors des Kraftfahrzeugs.

An der oberen Kante 106 einer Stirnseite 108 des Trägerteils 102 ist eine Verriegelungsvorrichtung 110 zur Verriegelung einer Fronthaube des Kraftfahrzeugs angeordnet. Alternativ kann die Verriegelungsvorrichtung 110 zum Beispiel auch an der Oberseite 112 des Trägerteils 102 angeordnet sein.

Die Verriegelungsvorrichtung 110 hat eine Öffnung 114, in die zum Beispiel ein hakenförmiger Vorsprung der Kraftfahrzeugfronthaube eingreifen kann, und der dort verriegelt wird. Vorzugsweise ist die Verriegelungsvorrichtung 110 mittig angeordnet.

Das Trägerteil 110 ist beispielsweise auf den Längsträgern 116 des Kraftfahrzeugs befestigt.

Die Zwischenräume zwischen dem Trägerteil 102 und den Kotflügelbänken werden durch Scheinwerferträgerteile überbrückt. In der Figur 1 ist hierzu eine linke Kotflügelbank 118 des Kraftfahrzeugs gezeigt sowie ein linkes Scheinwerferträgerteil 120, welches den Zwischenraum zwischen dem Trägerteil 102 und der Kotflügelbank 118 überbrückt.

Das Scheinwerferträgerteil 120 hat ein erstes Ende 122. An seinem ersten Ende 122 ist das Scheinwerferträgerteil 120 an dem Trägerteil 102 befestigt. Vorzugsweise wird das Ende 122 des Scheinwerferträgerteils 120 in der Nähe der Verriegelungsvorrichtung 110 befestigt, um die Maßkette zwischen der Verriegelungsvorrichtung 110 und der Kotflügelbank 118 kurz zu halten.

Beispielsweise ist hierzu das Ende 122 auf dem linken Rand der Oberseite 112 des Trägerteils 102 befestigt, wie es in der Figur 1 gezeigt ist. Zur Befestigung des Endes 122 an dem Trägerteil 102 können Befestigungsmittel vorgesehen sein, die Positionierungsmittel und/oder Toleranzausgleichsmittel beinhalten. Beispielsweise hat das Scheinwerferträgerteil 120 an seinem Ende 122 und/oder das Trägerteil 102 an seinem linken Rand ein Langloch, durch welches eine Schraubverbindung zwischen dem Trägerteil 102 und dem Scheinwerferträgerteil 120 hergestellt wird. Durch das Langloch wird ein Toleranzausgleich geschaffen. Beispielsweise erfolgt seitens des Automobilzulieferers eine Vormontage der Kraftfahrzeugfronteinheit 100, indem diese Schraubverbindung vormontiert, aber noch nicht festgezogen wird. Das Festziehen der Schraubverbindung erfolgt dann erst bei der Endmontage der Kraftfahrzeugfronteinheit 100 an dem Kraftfahrzeug.

Das Scheinwerferträgerteil 120 hat an seinem zweiten Ende 124 Befestigungsmittel 126, wie zum Beispiel ein Durchgangsloch zur Herstellung einer Schraubverbindung mit der Kotflügelbank 118.

Zwischen den Enden 122 und 124 ist eine Scheinwerfereinheit 128 an dem Scheinwerferträgerteil 120 aufgehängt.

Von besonderem Vorteil ist, dass durch die linken und rechten Scheinwerferträgerteile 120, die an dem Trägerteil 102 befestigt sind, ein Querträger der Kraftfahrzeugfronteinheit 100 gebildet wird. Dieser, durch die Montage der Trägerteile 102, 120 gebildete Querträger ersetzt den sonst üblicherweise im Stand der Technik als zusätzliche Komponente in einer Kraftfahrzeugfronteinheit beinhalteten Querträger. Durch den Wegfall dieses zusätzlichen Querträgers durch die erfindungsgemäße Funktionsintegration werden Gewicht und Herstellungskosten eingespart. Durch den Wegfall eines zusätzlichen Querträgers wird ferner Bauraum frei, der ein kompakteres Design des Kraftfahrzeugs und/oder eine Vergrößerung des Kraftfahrzeuginnenraums ermöglicht.

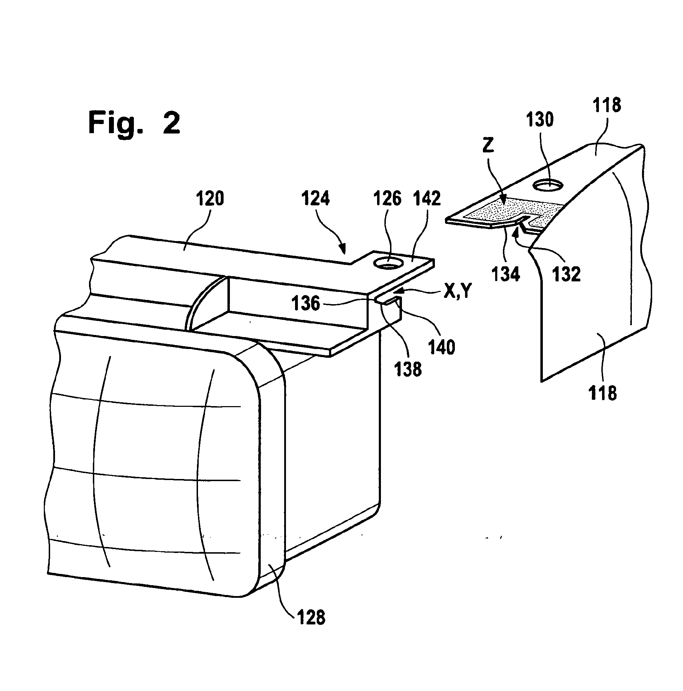

Die Figur 2 zeigt eine Detailansicht der Kotflügelbank 118 sowie des Endes 124 des Scheinwerferträgerteils 120. In der Kotflügelbank 118 befindet sich ein Durchgangsloch 130. Die Durchgangslöcher 126 und 130 werden übereinander positioniert, um durch die Durchgangslöcher 126 und 130 eine Schraubverbindung herzustellen, die das Ende 124 an der Kotflügelbank 116 befestigt. Zur Positionierung des Durchgangslochs 126 über dem Durchgangsloch 130 sind Positionierungsmittel an dem Ende 124 und an der Kotflügelbank 118 ausgebildet.

Die Kotflügelbank 118 hat hierzu einen Schlitz 132. Beispielsweise verläuft der Schlitz 132 in etwa in x-Richtung. Der Schlitz 132 mündet in eine trichterförmige vordere Kante 134. Der Schlitz 132 und die Kante 134 liegen beispielsweise im Wesentlichen in der xy-Ebene. Alternativ kann an der Kotflügelbank 118 und/oder an dem Ende 124 ein Positionierungsstift oder ein anderes Positionierungsmittel angeordnet sein, um das Ende 124 relativ zu der Kotflügelbank 118 auszurichten.

An dem Ende 124 befindet sich eine Kante 136, die im Wesentlichen in z-Richtung verläuft. Die Länge der Kante 136 ist in etwa gleich der Dicke des Blechs der Kotflügelbank 118, in dem der Schlitz 132 und die Kante 134 ausgebildet sind. Von dem unteren Ende der Kante 136 geht eine Schräge 138 aus, die beispielsweise im Wesentlichen in der xz-Ebene verläuft. Die Schräge 138 verläuft von dem unteren Ende der Kante 136 nach unten und mündet in einen Vorsprung 140, der beispielsweise in etwa in x-Richtung verläuft.

Von dem oberen Ende der Kante 136 ausgehend erstreckt sich ein Vorsprung 142 in der xy-Ebene, wobei in dem Vorsprung 142 das Durchgangsloch 126 ausgebildet ist. Zwischen dem Vorsprung 142, der Kante 136, der Schräge 138 und dem Vorsprung 140 wird ein Aufnahmebereich gebildet, der zum Eingriff in die Kotflügelbank 118 dient.

Hierzu wird beispielsweise die Unterseite des Vorsprungs 142 auf die Oberseite der Kotflügelbank 118 aufgelegt und dann in x-Richtung verschoben. Je nach der Toleranzsituation trifft dabei der Vorsprung 140, die Schräge 138 oder die Kante 136 auf die Kante 134. Aufgrund der Trichterform der Kante 134 wird durch die Vorschubbewegung des Vorsprungs 142 in x-Richtung das Scheinwerferträgerteil 120 relativ zu der Kotflügelbank 118 ausgerichtet, indem nämlich die Kante 136 in den Schlitz 132 eingeführt wird. Bei dieser Einführbewegung erfolgt eine Positionierung in x-, y- und z-Richtung. Nach dem Einführen der Kante 136 in den Schlitz 132 wird dann eine Schraubverbindung mit Hilfe der Durchgangslöcher 126 und 130 hergestellt.

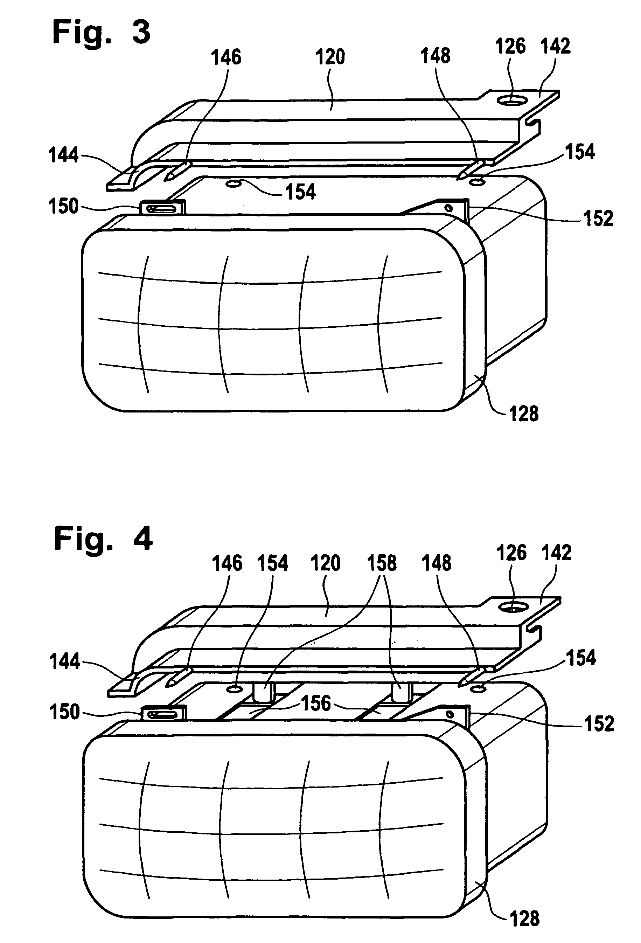

Die Figur 3 zeigt eine Ausführungsform des Scheinwerferträgerteils 120 mit Positionierungsmitteln zur Positionierung der Scheinwerfereinheit 128 relativ zu dem Scheinwerferträgerteil 120. An der vorderen Kante 144 des Scheinwerferträgerteils 120 sind hierzu Positionierungsstifte 146 und 148 angeordnet. An der Oberseite der Scheinwerfereinheit 128 sind dementsprechend Befestigungslaschen 150 und 152 angeordnet, in die die Positionierungsstifte 146 bzw. 148 eingeführt werden können. Auf der Oberseite der Scheinwerfereinheit 128 sind ferner zwei Innengewinde 154 angeordnet. Die Innengewinde 154 dienen zur Herstellung von Schraubverbindungen mit dem Scheinwerferträgerteil 120, welches hierzu den Innengewinden 154 entsprechende Durchgangslöcher aufweist (in der Figur 3 nicht gezeigt).

Zur Montage der Scheinwerfereinheit 128 an dem Scheinwerferträgerteil 120 werden die Positionierungsstifte 146 und 148 in die Befestigungslaschen 150 bzw. 152 eingeführt. Die Scheinwerfereinheit 128 wird dann entlang der Positionierungsstifte 146, 148 auf das Scheinwerferträgerteil 120 zubewegt, bis sie ihre Endposition erreicht hat, in der die Schraubverbindungen zwischen dem Scheinwerferträgerteil 120 und den Innengewinden 154 hergestellt werden.

Zur weiteren Vereinfachung der Positionierung der Scheinwerfereinheit 128 relativ zu dem Scheinwerferträgerteil 120 kann zum Beispiel die Befestigungslasche 150 ein Langloch aufweisen, um einen Freiheitsgrad der Positionierung in y-Richtung zu belassen. Die Befestigungslasche 152 hat dagegen ein Rundloch, durch welches die Positionierung in allen drei räumlichen Richtungen definiert ist.

Diese Ausführungsform ist auch hinsichtlich einer bequemen Demontage der Scheinwerfereinheit 128 vorteilhaft, etwa um die Scheinwerfereinheit 128 gegen eine neue zu ersetzen, oder um ein Leuchtmittel der Scheinwerfereinheit 128 auszutauschen, und die Scheinwerfereinheit 128 anschließend wieder zu montieren.

Zum Austausch eines Leuchtmittels der Scheinwerfereinheit 128 kann beispielsweise wie folgt vorgegangen werden:
Zunächst werden die Schraubverbindungen zwischen dem Scheinwerferträgerteil 120 und den Innengewinden 154 gelöst. Die Scheinwerfereinheit 128 wird dann zum Beispiel um einige Zentimeter nach vorne, d.h. in x-Richtung, herausgezogen, wobei das Gewicht der Scheinwerfereinheit 128 von den Positionierungsstiften 146, 148 getragen wird. In dem herausgezogenen Zustand der Scheinwerfereinheit 128 wird die Rückseite der Scheinwerfereinheit 128 zugänglich, sodass das Leuchtmittel ausgetauscht werden kann. Nach dem Austausch des Leuchtmittels wird die Scheinwerfereinheit 128 wieder entlang der Positionierungsstifte 146, 148 zurückgeschoben und die Schraubverbindungen zwischen dem Scheinwerferträgerteil 120 und den Innengewinden 154 werden wieder hergestellt.

Die Figur 4 zeigt eine alternative Ausführungsform. Im Unterschied zu der Ausführungsform der Figur 3 sind bei der Ausführungsform der Figur 4 zusätzliche Mittel vorgesehen, um das Herausziehen der Scheinwerfereinheit 128 für einen Austausch eines Leuchtmittels zu ermöglichen, ohne dass eine vollständige Demontage der Scheinwerfereinheit 128 von dem Scheinwerferträgerteil 120 erforderlich ist. Hierzu hat die Scheinwerfereinheit 128 beispielsweise auf ihrer Oberseite eine oder mehrere in x-Richtung verlaufende Rillen 156, in die jeweils ein Halteelement, d.h. beispielsweise ein stiftförmiges Element 158 des Scheinwerferträgerteils 120 von oben her eingreift. Nach der Lösung der Schraubverbindungen zwischen dem Scheinwerferträgerteil 120 und den Innengewinden 154 kann die Scheinwerfereinheit 128 bei dieser Ausführungsform nach vorne schubladenartig herausgezogen werden, wobei die stiftförmigen Elemente 158 durch die Rillen 156 gleiten und dabei das Gewicht der Scheinwerfereinheit 128 tragen. Nach dem Austausch des Leuchtmittels wird die Scheinwerfereinheit 128 dann wieder zurückgeschoben und die Schraubverbindungen werden wieder hergestellt.

### Bezugszeichenliste

- 100: Kraftfahrzeugfronteinheit
- 102: Trägerteil
- 104: Kühler
- 106: Kante
- 108: Stirnseite
- 110: Verriegelungsvorrichtung
- 112: Oberseite
- 114: Öffnung
- 116: Längsträger
- 118: Kotflügelbank
- 120: Scheinwerferträgerteil
- 122: Ende
- 124: Ende
- 126: Durchgangsloch
- 128: Scheinwerfereinheit
- 130: Durchgangsloch
- 132: Schlitz
- 134: Kante
- 136: Kante
- 138: Schräge
- 140: Vorsprung
- 142: Vorsprung
- 144: Kante
- 146: Positionierungsstift
- 148: Positionierungsstift
- 150: Befestigungslasche
- 152: Befestigungslasche
- 154: Innengewinde
- 156: Rillen
- 158: stiftförmiges Element

## Patentansprüche

1. Kraftfahrzeugfronteinheit mit einem mittleren Trägerteil (102) zur Aufnahme eines Kühlers (104) und zur Aufnahme einer Verriegelungsvorrichtung (110) für eine Kraftfahrzeugfronthaube und mit linken und rechten Scheinwerferträgerteilen (102), wobei jedes der Scheinwerferträgerteile an einem ersten Ende (122) zur Befestigung an dem mittleren Trägerteil und an einem zweiten Ende (124) zur Befestigung an einer Kotflügelbank (118) ausgebildet ist, wobei jedes der Scheinwerferträgerteile zum Aufhängen einer Scheinwerfereinheit (128) zwischen den ersten und zweiten Enden ausgebildet ist, wobei das mittlere Trägerteil und die an dem mittleren Trägerteil befestigten linken und rechten Scheinwerferträgerteile den einzigen Querträger der Kraftfahrzeugfronteinheit bilden, wobei jedes der Scheinwerferträgerteile zumindest einen Positionierungsstift (146, 148) zur Ausrichtung der Scheinwerfereinheit relativ zu dem Scheinwerferträgerteil aufweist, **dadurch gekennzeichnet, daß** die Scheinwerfereinheit horizontal entlang des Positionierungsstifts verschoben werden kann, wobei bei einer Verschiebung entlang des Positionierungsstifts das Gewicht der Scheinwerfereinheit durch den Positionierungsstift getragen wird.

2. Kraftfahrzeugfronteinheit nach Anspruch 1, wobei das mittlere Trägerteil eine Kühlerkassette bildet.

3. Kraftfahrzeugfronteinheit nach Anspruch 1 oder 2, wobei jedes der Scheinwerferträgerteile erste Positionierungsmittel, wie zum Beispiel zumindest einen Positionierungsstift (146, 148), zur Ausrichtung der Scheinwerfereinheit relativ zu dem Scheinwerferträgerteil hat.

4. Kraftfahrzeugfronteinheit nach Anspruch 1, 2 oder 3, mit Befestigungsmitteln (154) zur lösbaren Befestigung der Scheinwerfereinheit an dem Scheinwerferträgerteil.

5. Kraftfahrzeugfronteinheit nach einem der vorhergehenden Ansprüche, wobei jedes der Scheinwerferträgerteile zum Eingriff in eine an der Scheinwerfereinheit gebildete Rille (156) ausgebildet ist, wobei die Scheinwerfereinheit entlang der Rille nach vorne herausziehbar ist.

6. Kraftfahrzeugfronteinheit nach einem der vorhergehenden Ansprüche, wobei jedes der Scheinwerferträgerteile an seinem zweiten Ende (124) zweite Positionierungsmittel (136, 138, 140, 142) zur Positionierung relativ zu der Kotflügelbank aufweist.

7. Kraftfahrzeugfronteinheit, wobei jedes Scheinwerferträgerteil ein Stahlprofil beinhaltet.

8. Kraftfahrzeugfronteinheit nach einem der vorhergehenden Ansprüche, wobei jedes der Scheinwerferträgerteile aus Kunststoff besteht.

9. Kraftfahrzeugfronteinheit nach einem der vorhergehenden Ansprüche, wobei die ersten Enden der Scheinwerferträgerteile an dem mittleren Trägerteil in Höhe der Verriegelungsvorrichtung befestigt sind.

10. Kraftfahrzeugfronteinheit nach einem der vorhergehenden Ansprüche, wobei die ersten Enden der Scheinwerferträgerteile an dem mittleren Trägerteil auf einer Oberseite (112) des mittleren Trägerteils befestigt sind.

11. Kraftfahrzeugfronteinheit nach einem der vorhergehenden Ansprüche, mit dritten Positionierungsmitteln zur Positionierung der ersten Enden relativ zu dem mittleren Trägerteil.

12. Kraftfahrzeugfronteinheit nach einem der vorhergehenden Ansprüche, mit Mitteln zur Befestigung der ersten Enden der Scheinwerferträgerteile an dem mittleren Trägerteil, wobei die Mittel zur Befestigung Toleranzausgleichmittel aufweisen.

13. Kraftfahrzeugfronteinheit nach Anspruch 11 oder 12, wobei die dritten Positionierungsmittel und/oder die Toleranzausgleichmittel jeweils ein Langloch zur Befestigung der ersten Enden an dem Trägerteil (102) aufweisen.

## Claims

1. A motor vehicle front unit comprising a central carrier part (102) for accommodating a radiator (104) and for accommodating a locking device (110) for a motor vehicle front hood and having left and right headlamp carrier parts (102), wherein each of the headlamp carrier parts is designed, at a first end (122), to be fastened to the central carrier part and, at a second end (124), to be fastened to a fender support (118), wherein each of the headlamp carrier parts is designed to suspend a headlamp unit (128) between the first and the second ends, wherein the central carrier part and the left and right headlamp carrier parts, which are fastened to the central carrier part, form the only cross member of the motor vehicle front unit, wherein each of the headlamp carrier parts has at least one positioning pin (146, 148) for orienting the headlamp unit relative to the headlamp carrier part, **characterized in that** the headlamp unit can be displaced horizontally along the positioning pin, wherein, during a displacement along the positioning pin, the weight of the headlamp unit is carried by the positioning pin.

2. The motor vehicle front unit according to claim 1, wherein the central carrier part forms a radiator cassette.

3. The motor vehicle front unit according to claim 1 or 2, wherein each of the headlamp carrier parts has a first positioning means, such as at least one positioning pin (146,148), for example, for orienting the headlamp unit relative to the headlamp carrier part,

4. The motor vehicle front unit according to claim 1, 2 or 3, comprising fastening means (154) for detachably fastening the headlamp unit to the headlamp carrier part.

5. The motor vehicle front unit according to any one of the preceding claims, wherein each of the headlamp carrier parts is designed to engage into a channel (156) formed on the headlamp unit, wherein the headlamp unit can be removed toward the front, along the channel.

6. The motor vehicle front unit according to any one of the preceding claims, wherein each of the headlamp carrier parts has, on the second end (124) thereof, second positioning means (136, 138, 140, 142) for positioning relative to the fender support.

7. The motor vehicle front unit, wherein each headlamp carrier part comprises a steel profile.

8. The motor vehicle front unit according to any one of the preceding claims, wherein each of the headlamp carrier parts is made from plastic.

9. The motor vehicle front unit according to any one of the preceding claims, wherein the first ends of the headlamp carrier parts are fastened to the central carrier part at the level of the locking device.

10. The motor vehicle front unit according to any one of the preceding claims, wherein the first ends of the headlamp carrier parts are fastened to the central carrier part on a top side (112) of the central carrier part.

11. The motor vehicle front unit according to any one of the preceding claims, comprising third positioning means for positioning the first ends relative to the central carrier part.

12. The motor vehicle front unit according to any one of the preceding claims, comprising means for fastening the first ends of the headlamp carrier parts to the central carrier part, wherein the fastening means have tolerance compensation means.

13. The motor vehicle front unit according to claim 11 or 12, wherein the third positioning means and/or the tolerance compensation means each have a slot for fastening the first ends to the carrier part (102).

## Revendications

1. Unité avant de véhicule automobile avec une partie de support centrale (102) pour le logement d'un refroidisseur (104) et le logement d'un dispositif de verrouillage (110) destiné au capot avant de véhicule automobile et avec des parties de support de phare gauche et droite (102), dans laquelle chacune des parties de support de phare est conçue pour la fixation sur une partie de support centrale et à une deuxième extrémité (124) pour la fixation sur un support d'aile (118), dans laquelle chacune des parties de support de phare est conçue pour l'accrochage d'un bloc optique (126) entre la première et la deuxième extrémité, dans laquelle la partie de support centrale et les parties de support de phare gauche et droite fixées sur la partie de support centrale forment le seul support transversal de l'unité avant de véhicule automobile, dans laquelle chacune des parties de support des phare présente au moins un stylet de positionnement (146, 148) pour l'orientation du bloc optique par rapport à la partie support de phare, **caractérisée en ce que** le bloc optique peut être déplacé horizontalement le long d'un stylet de positionnement, où le poids du bloc optique est supporté par le stylet de positionnement lors du déplacement le long du stylet de positionnement.

2. Unité avant de véhicule automobile selon la revendication 1, dans laquelle la partie support centrale forme une cassette de refroidissement.

3. Unité avant de véhicule automobile selon les revendications 1 ou 2, dans laquelle chacune des parties de support de phare possède des premiers moyens de positionnement, comme, par exemple, au moins un stylet de positionnement (146, 148) pour l'orientation du bloc optique par rapport à la partie de support de phare.

4. Unité avant de véhicule automobile selon les revendications 1, 2 ou 3, avec des moyens de fixation (154) pour la fixation amovible du bloc optique sur la pièce de support de phare.

5. Unité avant de véhicule automobile selon l'une des revendications précédentes, dans laquelle chacune des parties de support est conçue pour une insertion dans une rainure (156) formée sur le bloc optique, où le bloc optique peut être retiré vers l'avant le long de la rainure.

6. Unité avant de véhicule automobile selon l'une des revendications précédentes, dans laquelle chacune des parties de support de phare présente des seconds moyens de positionnement (136, 138, 140, 142) à sa seconde extrémité (124), pour le positionnement par rapport au support d'aile.

7. Unité avant de véhicule automobile dans laquelle chaque partie de support de phare comporte un profilé en acier.

8. Unité avant de véhicule automobile selon l'une des revendications précédentes, dans laquelle chaque partie de support de phare est constituée de matière plastique.

9. Unité avant de véhicule automobile selon l'une des revendications précédentes, dans laquelle les premières extrémités des parties de support de phare sont fixées sur la partie de support centrale à la hauteur du dispositif de verrouillage.

10. Unité avant de véhicule automobile selon l'une des revendications précédentes, dans laquelle les premières extrémités des parties de support de phare sont fixées sur la partie de support centrale, sur une face supérieure (112) de la partie de support centrale.

11. Unité avant de véhicule automobile selon l'une des revendications précédentes, avec des troisièmes moyens de positionnement pour le positionnement des premières extrémités par rapport à la partie de support centrale.

12. Unité avant de véhicule automobile selon l'une des revendications précédentes, avec des moyens pour la fixation des premières extrémités des parties de support de phare sur la partie de support centrale, dans laquelle les moyens pour la fixation présentent des moyens de compensation de tolérances.

13. Unité avant de véhicule automobile selon les revendications 11 ou 12, dans laquelle les troisièmes moyens de positionnement et/ou les moyens de compensation des tolérances présentent chacun un trou oblong pour la fixation des premières extrémités sur la partie de support (102).
